# EUROPEAN PATENT SPECIFICATION

(11) **EP 0 379 077 B1**
(45) Date of publication and mention of the grant of the patent: **05.04.1995**
(21) Application number: 90100585.0
(22) Date of filing: 12.01.1990
(51) Int. Cl.: B60N 2/22

(54) **Articulation device of reclinable seat backs**
Gelenkbeschlag für eine schwenkbare Sitzrückenlehne
Dispositif d'articulation de dossiers de siège inclinables

(30) Priority: 19.01.1989 IT 5282289 U
(43) Date of publication of application: 25.07.1990
(73) Proprietor: ELCAT S.p.A., I-10090 Rivoli (TO) (IT)
(72) Inventor: Brandoli, Luigi, I-10090 Rivoli - To (IT)
(74) Representative: Lotti, Giorgio

(56) References cited:
- AU-A- 452 107
- FR-A- 2 302 882
- FR-A- 2 377 175
- FR-A- 2 391 089
- US-A- 4 384 744

## Description

The invention regards an articulation device of reclinable seat backs.

Several devices for the adjustment of the inclination of a seat back are available at present. Some of them consist in a cam engaging into a suitable seating of the seat, a sector gear integral to said cam is appointed to be engaged in a corresponding sector gear of the seat back during releasing stage of said back.

A crank defines locking and releasing conditions respectively by rotating the cam in its seating which is conformed to drive said cam to vertical movement during its rotation.

The French patent application FR-A-2 377 175 illustrates an articulation device of a reclinable seat back comprising a first plate integral to the cushion carrying a first true sector gear on an horizontal crosswise axis, and a second plate integral to the back carrying a second true sector gear on a second horizontal crosswise axis, parallel to the one of the first sector gear; said second sector gear is able to engage into the first sector gear when the respective axes are coinciding; a true opening on the axis of the respective sector gear is obtained in the plate integral to the cushion; a rotary cam carrying the plate of the back in its movement, is fitted in said opening and set to rotate by means of a crank, that can be operated by the person sitting on the seat, to rotate the cam between two extreme positions into the opening, respectively locking and releasing the seat back as the axes of the sector gears are coinciding and moving away; elastic means acting on the cam and on the crank to drive to the reciprocal engagement of the two sector gears are also assembled.

The Italian Utility Model No. 53294 B/87 of May 6, 1987 indicates, furthermore, that both the cam and the opening where it is fitted have an outline consisting of a plurality of bent and rectilinear sections abreast, the points of which are substantially equidistant from the respective centers for 270 degrees angular extension of the respective outlines; the remaining angular extension of the cam consists of a section extending in a substantially tangential direction from an extreme of the preceding outline part and turns over angularly to joint with substantially rectilinear section extending in substantially radial direction from the other extreme of the preceding part; the remaining angular extension of the seating is formed by a first step-like section, extending from an extreme of the preceding outline part followed by an arched section jointing with a substantially rectilinear section extending in substantially radial direction from the other extreme of the preceding part.

The device described in Patent Application FR-A-2 377 175 (corresponding to the preamble of claim 1) requires a cam and a pertinent seating realized by very accurate surface processing to ensure reliability in every type of employment and long repeated employment as only high precision couplings of cam-seating give a correct operation of the device.

On the contrary, the device described in the above-mentioned Italian Utility Model No. 53294 B/87 has extremely complex cam and seating outlines which cannot easily be processed and which may give reliability problems with time.

Purpose of this invention is to propose an easy to realize cam adjustment device where the cam and the pertinent seating do not require expensive and toilsome surface processing.

Purpose of this invention is also to propose a cam adjustment device, highly reliable in time, and having also a safety area corresponding to a first section of cam rotation avoiding disengagements of the system caused by any type of external forces acting on the seat back.

For these purposes and further ones which will be better appreciated as the description follows, the invention proposes an articulation device for reclinable seat backs according to claim 1.

The device of the invention will now be described with reference to the attached drawings, as follows:
Fig. 1 is the side view of an articulation of a seat - the position of the back is locked;
Fig. 2 is a view like Fig. 1: the dash-and-dot line represents the position of released seat back;

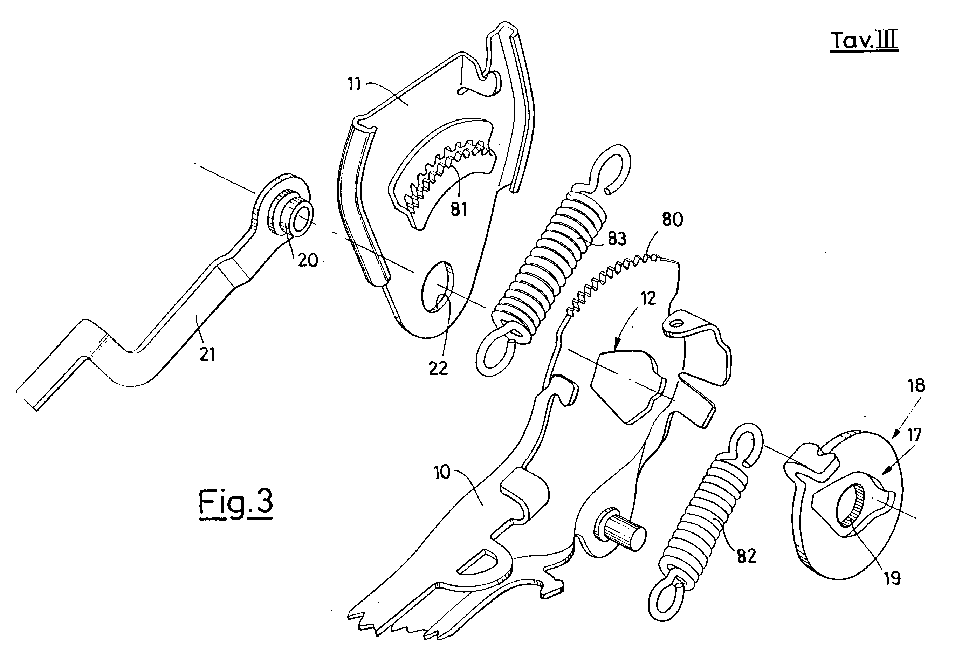

Fig. 3 is the exploded view of the main elements forming the device, as illustrated in Fig. 1 and 2;
Fig. 4 and 5 are front views of the outlines of two elements forming the device;
Fig. 6 is the view of the two elements of Fig. 4 and 5 coupled in two opposite operating stages;
Fig. 7 is the diagram of the forces and centers of rotation of the unit of Fig. 6.

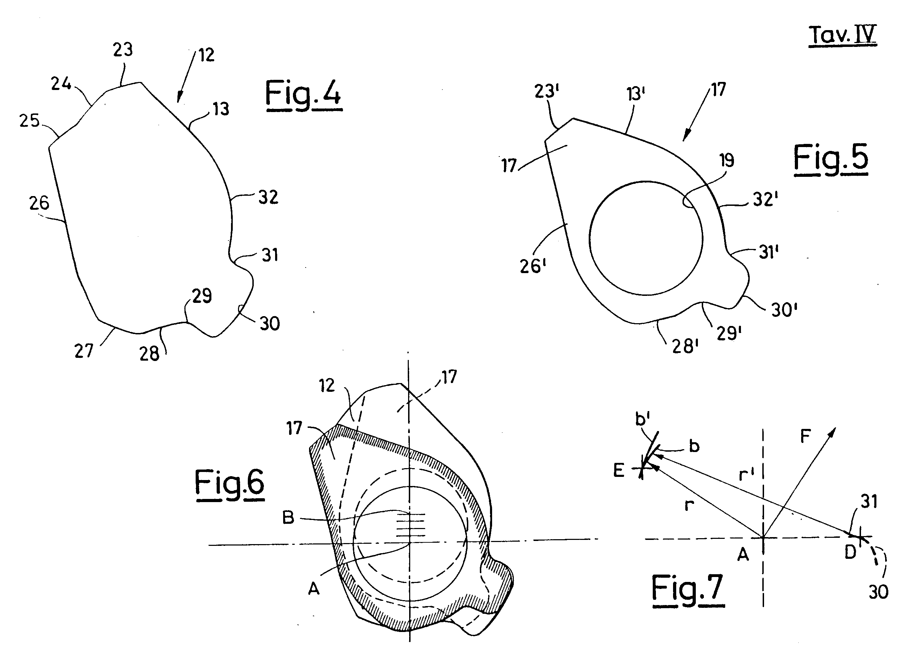

Plate 10 is integral to the seat cushion whilst plate 11 is integral to the back of the seat. A slot 12 is obtained in plate 10 (see also Fig. 4) the outline of which consists of a first substantially rectilinear section 13, followed by three substantially rectilinear sections 23, 24 and 25. The end of this latter section joints to a further substantially rectilinear one 26.

Said section 26 is joined to two rectilinear sections 27 and 28, the latter is joined to a rectilinear section 30 by means of an S-shaped section 29; section 30 finally is joined to the bent end 32 of the rectilinear section 13 by means of a further S-shaped section 31.

In said seating 12 the central half-blank cam-like part 17 of a disc 18 is inserted. Said central part 17 (see also Fig. 5) has a round appendix drilled in the interior and splined 19 into which a splined bushing of a crank 21 is inserted through hole 22 of the plate 11.

On the contrary, the outline of the cam 17 is coupled with plate 11 equipped with hole 22 for such purpose.

The outline of the cam 17 consists of bent and rectilinear sections as seating 12 and for this reason the sections of the cam corresponding to those of the seating bear the same reference numbers followed by an apex.

The only exception is the fact that the rectilinear sections 26′ and 13′ of cam 17 are joined through section 23′ only in opposition to the seat having three joining sections 23, 24 and 25 joined to one another.

Finally, the plate 10 carries toothings 30 appointed to engage in corresponding toothings 31 of the plate 11 in the locking position of the seat back to the cushion.

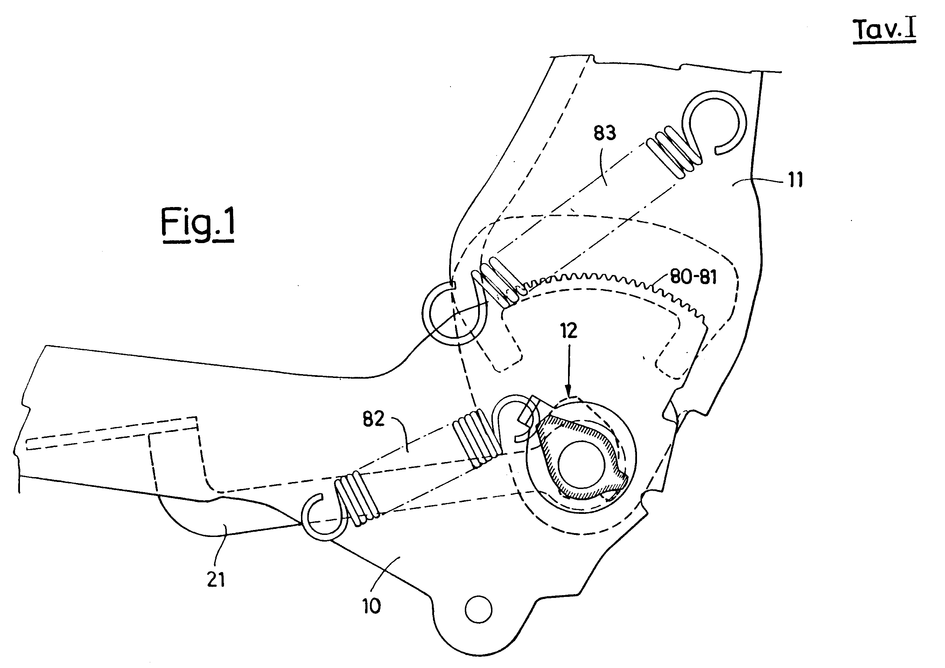

In the locking condition as illustrated in Fig. 1 the cam is housed in the seating 12 and is stretched by a first spring 82 with its section 26′ against the corresponding section 26 of the seating, and at the bottom its section 28′ against section 28 of the seating (see also Fig. 6 where cam 17 is illustrated in released position); this determines the lowered position at lower limit stop of axis A of cam rotation and subsequent reciprocal engagement of sector gears 80 and 81, so that the seat back is locked in the illustrated position.

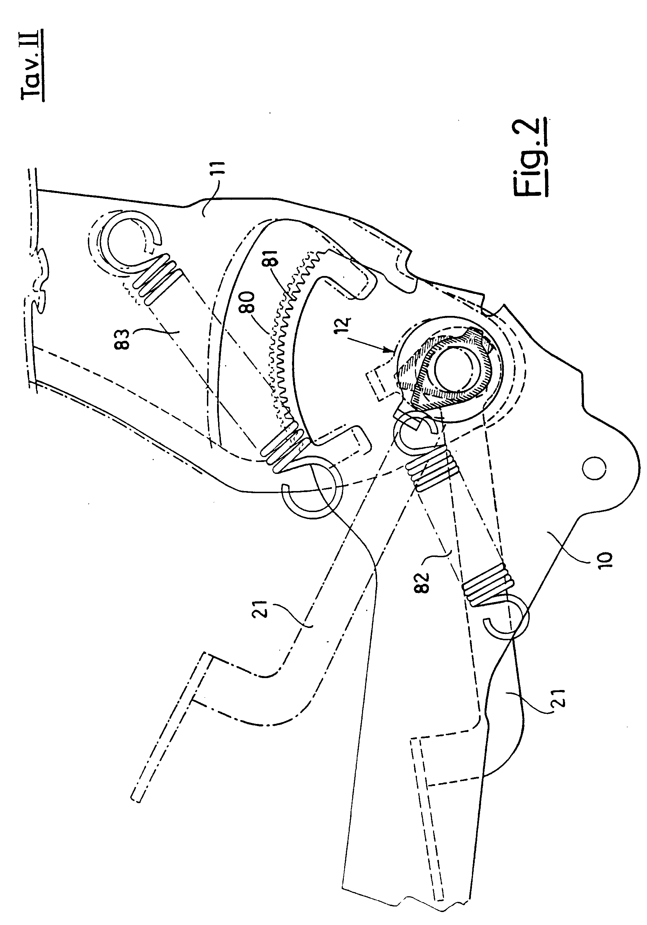

If the release is desired, rotate the crank 21 - as in dash-and-dot line of Fig. 2 - opposing first spring 82, so that the cam 17 rotates around its own axis hoisting itself whilst its projection 30′ slides on outline 30 of the seating 12 until it reaches the position of Fig. 2 and 6 (dash-and-dot line), where the axis of the cam is being carried in the hoisted B position and cam 17 is fixed with surfaces 13′ and 32′ against surfaces 13 and 32 of the seating 12 and with the part between section 29′ and projection 30′ against angular section 29 of the seating 12. As cam 17 is being hoisted, the sector gear 80 carried by it is also hoisted disengaging itself from sector gear 81 of the seat back, opposing a second spring 83, which can thus rotate and take the desired inclination.

The described release position always takes place in opposition to said first spring 82 connected between cam 17 and plate 10, and in opposition to said second spring 83 connected between plates and 10 and 11, so the systems returns automatically to the condition of Fig. 1 with subsequent back locking when releasing crank 21.

The safety system of the invention is illustrated in Fig. 6 and 7.

As can be noticed, between seatings 25 and 23 of the section 23′ of cam 17, respectively in locking and release position of the seat back, there is an intermediate section 24, oblique with respect to the others.

As illustrated in the diagram of Fig. 7, when operating the proper release lever 21, cam 17 rotates of about 15 degrees around the axis passing through A; its end 23′ indicated as point E covers the arc b of radius r at the end of which it may start its climb to bring itself in the position of the short dash line of Fig. 6. If, on the contrary lever 21 is not operated, force F applied to seat back 11 corresponds to a torque which is discharged to gear sectors 80, 81 and to said force F applied to point A. Said force F tends to rotate cam 17 around point D so that its end E covers an arc b′ of radius r′ unsuitable with seating 12 and particularly with its section 24.

The physical impossibility of releasing seat back 11 without operating on release lever 21, is thus realized.

## Claims

1. Articulation device for reclinable seat backs comprising a first plate (10) integral to the cushion carrying a first true sector gear (80) on a horizontal crosswise axis; a second plate (11) being integral to the back, carrying a second true sector gear (81) on a second horizontal crosswise axis and parallel to that of the first sector gear (80); the second sector gear (81) being engageable in the first sector gear (80) when the respective axes coincide; a true seating (12) on the axis of the respective sector gear (80) being obtained in the first plate (10) integral to the cushion; a rotary cam (17), carrying the second plate (11) of the seat back in its movement, being fitted in said seating (12) and being driven for rotation by means of a crank (21) which can be operated by the seat occupant, who rotates the cam (17) between two extreme positions into the opening, respectively locking and releasing the back, and driving the axes of the sector gears (80, 81) to be coinciding and moving away respectively; elastic means (82, 83) acting on the cam (17) and on the crank (21) to drive the two sector gears (80, 81) into reciprocal engagement, and wherein the seating (12) and the cam (17) both have outlines consisting of at least two substantially rectilinear sections (13, 26; 13', 26') and at least one curved section (32; 32'), said outlines cooperating with one another, charactherized in that:
a) the seating (12) has an outline consisting of two main opposite, substantially rectilinear sections (first and fifth sections 13 and 26) converging towards joining sections which are also rectilinear and step-like to one another (second, third and fourth sections 23, 24, 25); the other extreme of one of the main sections (first section 13) being joined to an arched section (32), whilst the other extreme of the other main section (fifth section 26) is joined to substantially rectilinear sections (sixths and seventh sections 27, 28) which are step-like to one another; the arched section (32) and the extreme one of the rectilinear sections (seventh section 28), which are joined to the main sections (13, 26), being joined to one another by means of a substantially U-shaped section (29, 30, 31); and wherein the cam (17) has an outline consisting of two main opposite sections (13', 26') so as to copy the corresponding main sections (first and fifth sections 13 and 26) of the seating (12), one in the locking position and one in the releasing position of the seat back; the main sections (13', 26') of the cam (17) converging towards a rectilinear joining section (23') corresponding to those (23, 24, 25) of the seating (12); the other extremes of said main sections (13', 26') of the cam (17) being joined through a bent section (32') , at least a rectilinear section (28') and a substantially U-shaped (30') section corresponding to those (28, 30) of the seating (12); and in that
b) the rectilinear section (third section 24) of the seating (12), which is intermediate between the other joining sections (second and fourth sections 23, 25), is oblique with respect to them (23, 25).

2. Device according to claim 1 wherein the outlines of the seating (12) and the cam (17) are such that in the locking position of the seat back the cam is being rotated so that one of its sections of main outline (26') hits against the corresponding rectilinear section (26) of the seating, its joining section (23') of the main sections (13', 26') hits against one of the joining sections (25) of the seating main sections (13, 26), whilst one of its substantially rectilinear sections (28') hits against the corresponding substantially rectilinear section (28) of the seating; and wherein the cam (17), in the releasing condition of the seat back, is rotated so that its other main section (13') and the adjacent armed section (32') correspond to the main section (13) and armed section (32) of the seating, whilst its joining section (23') to the main sections (13', 26) hits against another joining section (23) of the main sections (13, 26) of the seating (12).

3. Device according to claim 1 wherein the step-like joining sections (23, 24,25) of the main sections (13, 26) of the seating (12) are slanting to oppose an accidental rotation of the cam (17) in the seating (12) when this is in seat back locking position and is not being rotated by operating the crank (21).

4. Device according to claim 1 wherein the cam (17) is obtained in a disc (18) carrying a central splined hole (19), the rotation axis of which coincides with the cam's, into which hole (19) a splined appendix (20) of the crank (21) is inserted, and the plate (11) of the seat back is assembled on the external surface of said splined hole (19) of the disc (18).

## Patentansprüche

1. Gelenkbeschlag für verstellbare Rückenlehnen von Sitzeinrichtungen, mit
einer ersten, einstückig mit einer Dämpfungseinrichtung ausgebildeten Platte (10), die einen ersten, um eine erste horizontale Querachse ausgerichteten Zahnbogen (80) aufweist; einer zweiten, einstückig mit der Rückenlehne ausgebildeten Platte (11), die einen zweiten, um eine zweite horizontale Querachse, die parallel zur Querachse des ersten Zahnbogens (80) verläuft, ausgerichteten Zahnbogen (81) aufweist; wobei der zweite Zahnbogen (81) in Eingriff mit dem ersten Zahnbogen (80) bringbar ist, wenn die entsprechenden Achsen zusammenfallen;
einem ausgerichteten Sitz (12) um die entsprechende Achse des ersten Zahnbogens (80) in der ersten mit der Dämpfereinrichtung einstückig ausgebildeten Platte (10);
einem Drehnocken (17), der die zweite Platte (11) der Rückenlehne während ihrer Bewegung trägt, in diesen Sitz (12) eingepaßt ist und mittels einer Kurbel (21) von einer die Sitzeinrichtung benutzenden Person in Drehbewegung versetzbar ist, die den Drehnocken (17) zwischen zwei Extrempositionen in einer Öffnung verdreht beziehungsweise in eine Verriegelungs- und eine Freigabestellung der Rücklehne und damit die Achsen der Zahnbögen (80, 81) bewegt, damit sie zusammenfallen bzw. voneinander weg bewegt sind;
elastischen Einrichtungen (82, 83), die auf den Drehnocken (17) und die Kurbel (21) einwirken, um die zwei Zahnbögen (80, 81) in einen gegenseitigen Eingriff zu bringen, wobei der Sitz (12) und der Drehnocken (17) jeweils eine Außenkontur aufweisen, die jeweils mindestens zwei, im wesentlichen lineare Bereiche (13, 26; 13', 26') und mindestens einen gekrümmten Bereich (32; 32') aufweisen, wobei die Außenkonturen miteinander kooperieren,
**dadurch gekennzeichnet**, daß
a) der Sitz (12) eine Außenkontur hat, die zwei, einander gegenüberliegende, im wesentlichen lineare Hauptbereiche (erster 13 und fünfter Bereich 26) umfaßt, welche in Richtung auf Verbindungsbereiche konvergieren, die ebenfalls linear und stufenförmig zueinander versetzt ausgebildet sind (zweiter 23, dritter 24 und vierter Bereich 25); der andere Endbereich eines der Hauptbereiche (erster Bereich 13) mit einem gekrümmten Bereich (32) verbunden ist, während der andere Endbereich des anderen Hauptbereiches (fünfter Bereich 26) mit im wesentlichen linearen Bereichen (sechster 27 und siebter Bereich 28) verbunden ist, die zueinander stufenförmig versetzt sind; wobei der gekrümmte Bereich (32) und ein Endbereich der linearen Bereiche (siebter Bereich 28), welche mit den Hauptbereichen (13, 26) verbunden sind, miteinander über einen im wesentlichen U-förmigen Bereich (29, 30, 31) verbunden sind; wobei der Drehnocken (17) eine Außenkontur hat, die zwei, einander gegenüberliegende Hauptbereiche (13', 26') umfaßt, die den entsprechenden Hauptbereichen (13, 26) des Sitzes (12) nachgebildet sind, und zwar einen in der Verriegelungsposition und einen in der Freigabeposition der Rückenlehne; die Hauptbereiche (13', 26') des Drehnockens (17) in Richtung auf einen linearen Verbindungsbereich (23') konvergieren, der den verbindenden Bereichen (23, 24, 25) des Sitzes (12) entspricht, die anderen Endbereiche der Hauptbereiche (13', 26') des Drehnockens (17) über einen gebogenen Bereich (32') und mindestens einen linearen Bereich (28') und einen im wesentlichen U-förmigen Bereich (30'), die denjenigen Bereichen (28, 30) des Sitzes (12) entsprechen, miteinander verbunden sind; und daß
(b) der zwischen den anderen verbindenden Bereichen (zweiter 23 und vierter Bereich 25) des Sitzes (12) liegende lineare Bereich (dritter Bereich 24) bezüglich dieser Bereiche (23, 25) schräg verläuft.

2. Vorrichtung nach Anspruch 1,
**dadurch gekennzeichnet** ,daß die Außenkonturen des Sitzes (12) und des Drehnockens (17) derart ausgebildet sind, daß in der Verriegelungsposition der Rückenlehne der Drehnocken so drehbar ist, daß einer seiner Bereiche der Hauptaußenkontur (26') an den entsprechenden linearen Bereich (26) des Sitzes anschlägt, sein Verbindungsbereich (23') der Hauptbereiche (13', 26') an einen der Verbindungsbereiche (25) der Hauptbereiche (13, 26) des Sitzes anschlägt, wobei einer seiner im wesentlichen linearen Bereiche (28') an den entsprechenden, im wesentlichen linearen Bereich (28) des Sitzes anschlägt; und daß der Drehnocken (17) im Freigabezustand der Rückenlehne derart drehbar ist, daß sein anderer Hauptbereich (13') und der daran angrenzende gekrümmte Bereich (32') dem Hauptbereich (13) und dem gekrümmten Bereich (32) des Sitzes entsprechen, wobei sein Verbindungsbereich (23') zu den Hauptbereichen (13', 26) an einen anderen Verbindungsbereich (23) der Hauptbereiche (13, 26) des Sitzes (12) anschlägt.

3. Vorrichtung nach Anspruch 1,
**dadurch gekennzeichnet**, daß die stufenförmigen Verbindungsbereiche (23, 24, 25) der Hauptbereiche (13, 26) des Sitzes (12) schräg verlaufend angeordnet sind, um einer zufälligen Drehbewegung des Drehnockens (17) im Sitz (12) entgegenzuwirken, wenn dieser sich in der Verriegelungsposition für die Rückenlehne befindet und nicht durch eine Betätigung der Kurbel (21) in Drehung versetzt ist.

4. Vorrichtung nach Anspruch 1,
**dadurch gekennzeichnet**, daß der Drehnocken (17) in einer Scheibe (18) aufgenommen ist, die ein mit Keilnuten versehenes Loch (19) aufweist, dessen Rotationsachse mit derjenigen des Drehnockens übereinstimmt, in welches Loch (19) ein mit Keilnuten versehener Ansatz (20) der Kurbel (21) eingefügt ist, wobei die Platte (11) der Rückenlehne an der Außenoberfläche des mit Keilnuten versehenen Lochs (19) der Scheibe (18) befestigt ist.

## Revendications

1. Dispositif d'articulation pour sièges à dossier inclinable comprenant une première plaque (10) solidaire du coussin du siège, qui porte un premier secteur plat denté (80) calé sur un axe transversal horizontal ; une seconde plaque (11) solidaire du dossier, qui porte un second secteur plat denté (81) calé sur un second axe transversal horizontal parallèle à celui du premier secteur plat denté (80) ; le second secteur denté (81) pouvant engréner avec le premier secteur denté (80) quand leurs axes respectifs coïncident ; un siège de came plat (12) calé sur l'axe du secteur denté respectif (80) étant prévu dans la première plaque (10) solidaire du coussin du siège; une came tournante (17) supportant la seconde plaque (11) du dossier du siège lors de son mouvement, venant s'ajuster dans ledit siège de came (12), et étant mise en rotation au moyen d'une manivelle (21) qui peut être actionnée par l'occupant du siège qui fait tourner la came (17) entre deux positions extrêmes dans l'ouverture associée, respectivement de blocage et de libération du dossier, et amène respectivement les axes des secteurs dentés (80, 81) à coïncider et à s'éloigner ; des moyens élastiques (82,83) agissant sur la came (17) et sur la manivelle (21) pour amener les deux secteurs dentés (80, 81) à engrèner l'un avec l'autre, le siège de came (12) et la came (17) ayant tous deux des profils consistant en au moins deux parties essentiellement rectilignes (13, 26 ; 13', 26') et au moins une partie courbée (32; 32'), lesdits profils coopérant l'un avec l'autre, caractérisé en ce que :
a) le siège de came (12) présente un profil composé de deux parties principales opposées, essentiellement rectilignes (les première et cinquième parties 13 et 26) qui convergent vers des parties de jonction qui sont également rectilignes et en échelon l'une par rapport à l'autre (seconde, troisième et quatrième parties 23, 24, 25) ; l'autre extrémité d'une des parties principales (première partie 13) se raccordant à une partie cambrée (32), alors que l'autre extrémité de l'autre partie principale (cinquième partie 26) se raccorde à des parties essentiellement rectilignes (sixième et septième parties 27, 28) qui sont en échelon l'une par rapport à l'autre ; la partie cambrée (32) et la plus extrême des parties rectilignes (septième partie 28), qui se raccordent aux parties principales (13, 26), étant raccordées l'une à l'autre par l'intermédiaire d'une partie essentiellement en forme de U (29, 30, 31) ; et dans lequel la came (17) présente un profil composé de deux parties principales opposées (13', 26') de façon à recopier les parties principales correspondantes (première et cinquième parties 13 et 26) du siège de came (12), une dans la position de blocage et une dans la position de libération du dossier ; les parties principales (13', 26') de la came (17) convergeant vers une partie de jonction rectiligne (23') qui correspond à celles (23, 24, 25) du siège de came (12) ; les autres extrémités desdites parties principales (13', 26') de la came (17) étant raccordées par l'intermédiaire d'une partie cambrée (32'), d'au moins une partie rectiligne (28') et d'une partie essentiellement en forme de U (30') correspondant à celles (28, 30) du siège de came (12); et en ce que
b) la partie rectiligne (troisième partie 24) du siège de came (12), qui est intermédiaire entre les autres parties de raccordement (seconde et quatrième parties 23, 25), est inclinée par rapport à ces parties (23, 25).

2. Dispositif selon la revendication 1, dans lequel les profils du siège de came (12) et de la came (17) sont tels que, dans la position de blocage du dossier, la came (17) tourne de façon à ce qu'une des parties principales de son profil (26') bute contre la partie rectiligne correspondante (26) du siège de came, que sa partie (23') de jonction des parties principales (13', 26') bute contre une des parties (25) de jonction des parties principales (13, 26) du siège de came, alors qu'une de ses parties essentiellement rectilignes (28') bute contre la partie correspondante essentiellement rectiligne (28) du siège de came ; et dans lequel la came (17), dans l'état de libération du dossier du siège, tourne de façon à ce que son autre partie principale (13') et la partie adjacente cambrée (32') correspondent à la partie principale (13) et à la partie cambrée (32) du siège, alors que sa partie (23') de jonction des parties principales (13', 26') bute contre une autre partie (23) de jonction des parties principales (13, 26) du siège de came (12).

3. Dispositif selon la revendication 1, dans lequel les parties en échelon (23, 24, 25) de jonction des parties principales (13, 26) du siège de came (12) sont inclinées pour s'opposer à une mise en rotation accidentelle de la came (17) dans le siège de came (12) quand celle-ci est dans la position de blocage du dossier et n'est pas mise en rotation par action de la manivelle (21).

4. Dispositif selon la revendication 1, dans lequel la came (17) est agencée sur un disque (18) qui comporte un trou central cannelé (19), dont l'axe de rotation coïncide avec celui de la came, trou (19) dans lequel un appendice cannelé (20) de la manivelle (21) est inséré, la plaque (11) du dossier étant assemblée sur la surface extérieure dudit trou cannelé (19) du disque (18).
